# FASCICULE DE BREVET EUROPEEN

(11) **EP 0 511 910 B1**
(45) Date de publication et mention de la délivrance du brevet: **13.09.1995**
(21) Numéro de dépôt: 92401203.2
(22) Date de dépôt: 27.04.1992
(51) Int. Cl.: H02G 1/02

(54) **Nacelle héliportée et procédé de remplacement d'un manchon sur un câble aérien**
Hubschrauber-getragener Arbeitskorb und Verfahren zum Austausch einer Verbindungsmuffe eines Freileitungskabels
Helicopter-carried workbasket and process for replacing the junction sleeve of an overhead cable

(30) Priorité: 29.04.1991 FR 9105257
(43) Date de publication de la demande: 04.11.1992
(73) Titulaire: ELECTRICITE DE FRANCE Service National, 75008 Paris (FR)
(72) Inventeur: De Forges de Parny, Robert, F-13950 Cadolive (FR); Moudin, Gérard, F-73200 Albertville (FR); Ruaux, Philippe, F-13340 Rognac (FR)
(74) Mandataire: Signore, Robert

(56) Documents cités:
- US-A- 4 422 528

## Description

### DOMAINE DE L'INVENTION

L'invention concerne l'entretien et la réparation des câbles aériens, tels que des câbles électriques du réseau public de distribution. L'invention est particulièrement adaptée aux changements de manchons de jonction entre deux tronçons d'un câble aérien. L'invention peut également s'appliquer à des câbles de moyens de transport, tels que les téléphériques et toutes les cabines portées par des câbles. L'invention concerne indirectement l'héliportage.

### ART ANTERIEUR

La plupart des câbles aériens nécessitent, une fois qu'ils sont installés, de nombreuses opérations d'entretien, de réparation et d'aménagement. En effet, dans le cadre des programmes d'entretien et d'aménagement du réseau public de distribution électrique, l'Electricité de France doit assurer de nombreuses interventions diverses. Par exemple, le remplacement d'un manchon de jonction entre deux tronçons d'un câble aérien nécessite la pose au sol de ce câble, de manière à effectuer les réparations, et la remise en place du câble, suspendu entre deux pylônes. Ce type d'intervention est extrêmement long et coûteux.

Du document US-A-4 422 528 est connue une nacelle héliportée destinée à la réparation et l'entretien de câbles aériens, constituée d'une structure métallique comportant :
- un plancher sur lequel peuvent évoluer un ou plusieurs opérateurs ;
- des moyens d'arrimage de la structure métallique à l'hélicoptère auquel la nacelle est suspendue ;
- des moyens de positionnement de la nacelle par rapport à un câble aérien, la nacelle étant constamment suspendue à l'hélicoptère.

L'invention vise à faciliter, à améliorer et à accélérer ce type d'opération sur n'importe quel câble aérien.

### RESUME DE L'INVENTION

A cet effet, un premier objet de l'invention est une nacelle héliportée, destinée à la réparation ou l'entretien d'un câble aérien, constituée d'une structure métallique comportant :
- au moins un plancher sur lequel peuvent évoluer un ou plusieurs opérateurs ;
- un châssis supérieur ;
- des moyens d'arrimage de la structure métallique à l'hélicoptère auquel la nacelle est suspendue, constitués d'anneaux fixés au châssis supérieur et dans lesquels peuvent être passées des élingues d'un filin de l'hélicoptère ;
- des moyens de positionnement de la nacelle par rapport à un câble aérien, la nacelle étant constamment suspendue à l'hélicoptère ;
- des moyens pyrotechniques de séparation de la structure métallique par rapport au châssis supérieur ;
- des moyens d'arrimage des opérateurs au châssis supérieur, en cas de largage de la structure métallique.

La réalisation préférentielle de la nacelle selon l'invention prévoit que les moyens de positionnement sont constitués d'au moins une barre de guidage inclinée vers le haut, et placée latéralement à la structure métallique pour amener le câble au fond d'un logement par traction verticale de l'hélicoptère sur la nacelle.

De préférence, la structure métallique a une forme parallélépipédique dont au moins une paroi latérale d'extrémité est montée pivotante à son extrémité inférieure pour pouvoir être basculée dans le prolongement du plancher afin de prolonger ce dernier. Dans ce cas, il est préférable d'utiliser des câbles de positionnement pour bloquer en position horizontale les parois latérales d'extrémité par rapport à la structure métallique.

La réalisation préférentielle du châssis supérieur prévoit que la fixation de la structure métallique à ce châssis utilise des tirants intérieurs placés dans des montants verticaux de la structure métallique et dont l'extrémité supérieure est fixée dans un coin du châssis supérieur et à l'intérieur duquel se trouvent les moyens pyrotechniques de séparation constitués d'un boulon pyrotechnique.

De préférence, les moyens de commande des boulons pyrotechniques sont constitués d'un cordeau pyrotechnique relié à l'hélicoptère.

Pour faciliter les réparations effectuées avec la nacelle selon l'invention, cette dernière possède un chariot déplaçable horizontalement dans la structure métallique et servant de table de travail du câble, pour les opérateurs se trouvant dans la nacelle.

Un deuxième objet principal de l'invention est un procédé de changement d'un manchon de jonction entre deux tronçons d'un câble aérien, consistant à :
- positionner par l'hélicoptage une nacelle telle que définie précédemment près du câble et maintenir la nacelle coincée en dessous du câble par traction verticale ;
- fixer un vérin de reprise d'efforts sur le câble aux bornes du manchon à remplacer ;
- tendre légèrement le câble au moyen du vérin de reprise d'efforts pour détendre le câble au niveau du manchon ;
- démonter le manchon usagé ;
- placer un autre manchon neuf ;
- détendre le câble par le relâchement du vérin de reprise d'efforts ;
- dégager la nacelle par rapport au câble et l'évacuer.

### LISTE DES FIGURES

La description détaillée de l'invention est accompagnée de plusieurs figures qui représentent respectivement :
- figure 1, l'utilisation de la nacelle selon l'invention pour le remplacement d'un manchon de jonction sur un câble aérien ;
- figure 2, le processus de changement d'un manchon de jonction sur un cable aérien tendu ;
- figure 3, en perspective, la nacelle selon l'invention ;
- figure 4, les moyens de largage de la nacelle selon l'invention ;
- figures 5A, 5B, le chariot utilisé à bord de la nacelle selon l'invention.

### DESCRIPTION DETAILLEE D'UNE REALISATION DE L'INVENTION

### Procédé selon l'invention :

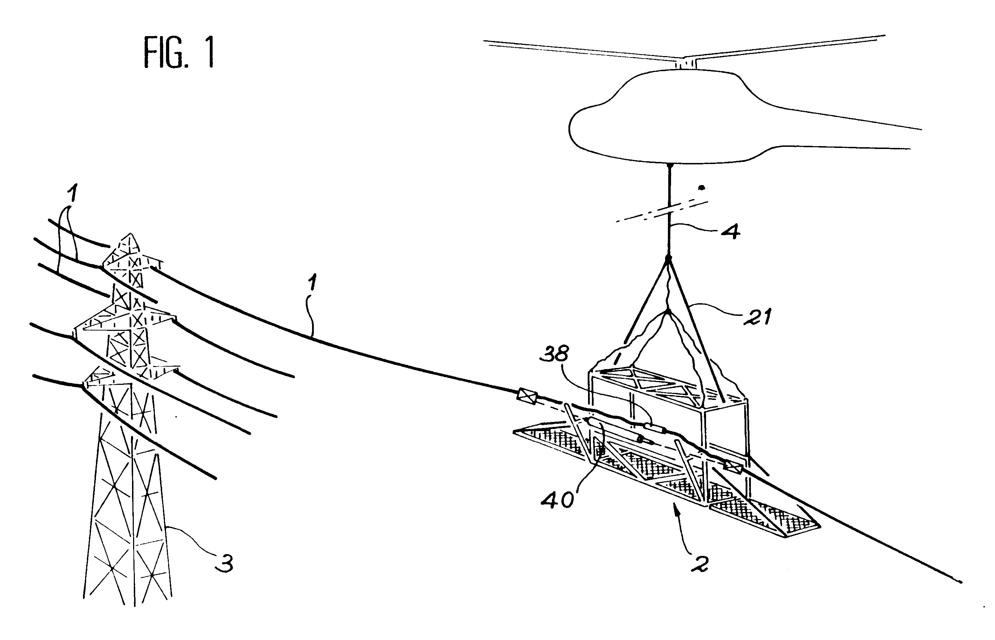

La figure 1 illustre l'utilisation d'une nacelle 2, selon l'invention, pour le changement d'un manchon de jonction 38 d'un câble aérien 1. Ce dernier peut faire partie d'un faisceau de câbles 1 suspendus à une série de pylônes 3, dans le cadre du réseau public de distribution d'électricité. La nacelle 2 est suspendue à un hélicoptère au moyen d'un filin 4 ; elle est positionnée à côté du manchon 38.

On comprend aisément le concept du procédé de réparation d'un câble aérien 1, lié à la nacelle 2 selon l'invention. Cette dernière est en effet héliportée, de manière à positionner momentanément un ou plusieurs opérateurs dans le plus proche environnement du manchon de jonction 38 à changer, dans le but de changer ce dernier. Une telle opération peut être effectuée en une dizaine de minutes.

### Procédé de changement d'un manchon :

La première étape de ce procédé est bien entendu d'approcher une nacelle 2 suspendue à un hélicoptère près du manchon 38 sur le câble 1. A cet effet, la nacelle 2 comprend des moyens de positionnement par rapport aux câbles aériens 1. Ces moyens seront détaillés ultérieurement.

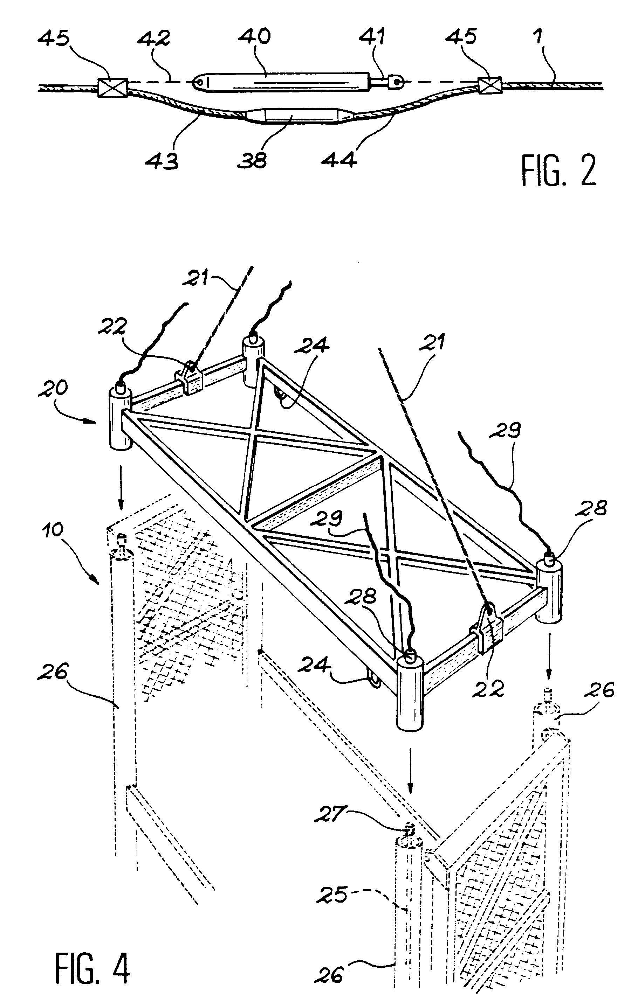

Un vérin de reprise d'efforts 40 ayant été embarqué à bord de la nacelle 2, la deuxième étape consiste, comme le montre la figure 2, à court-circuiter le manchon 38 sur le cable 1. Plus exactement, cette opération consiste à fixer une première extrémité 42 du vérin 40 à une première partie 43 du vérin 1 placée d'un premier côté du manchon 38. Cette fixation peut se faire avec n'importe quel moyen de verrouillage 45 par mâchoires ou coincement d'une élingue constituant la première extrémité 42 du vérin 40 sur la première partie 43 du câble. Cette opération se poursuit en fixant la deuxième extrémité du vérin 40 qui est la tige mobile 41 de ce vérin de reprise d'efforts 40, à la deuxième partie 44 du câble 1 se trouvant de l'autre côté du manchon 38. On utilise toujours à cet effet des moyens de fixation 45 par mâchoires ou coincements. Ces deux premières opérations peuvent être effectuées par les opérateurs embarqués à bord de la nacelle 2, lorsque celle-ci est placée à côté du manchon 38, au moyen de l'hélicoptère effectuant un vol stationnaire.

La troisième étape consiste à faire agir le vérin de reprise d'efforts 40 en traction, c'est-à-dire en faisant rentrer la tige mobile 41 de ce vérin 40 dans le corps de ce dernier. A cet effet, n'importe quelle source d'énergie peut être embarquée à bord de la nacelle 2, par exemple, un moteur à explosion alimentant un réducteur hydraulique.

Cette troisième étape a pour effet de détendre le cable 1, en particulier la partie comportant le manchon 38, et limitée par les moyens de fixation 45.

La quatrième opération consiste dès lors à démonter le manchon 38 des parties 43 et 44 du câble 1 qu'il assemble.

L'étape suivante consiste à placer un nouveau manchon 38 à la place de l'ancien, d'une manière identique, et au moyen d'outillages connus et déjà utilisés pour effectuer cette opération au sol sans hélicoptère.

Lorsque le nouveau manchon 38 est mis en place, et que les deux parties 43 et 44 du câble 1 sont de nouveau fixées l'une à l'autre, le câble 1 peut reprendre sa position initiale, c'est-à-dire être de nouveau tendu. Cette opération se fait par relâchement du vérin de reprise d'effort 40, c'est-à-dire par la sortie relative de sa tige 41 du corps du vérin. Le nouveau manchon 38 est alors placé sous tension et le vérin de reprise d'efforts 40 n'est plus soumis à la traction des deux côtés du câble 1.

La dernière opération consiste évidemment à dégager la nacelle 2 du câble aérien 1 et à évacuer cette nacelle 2 pour qu'elle puisse être de nouveau posée au sol.

Pendant le remplacement du manchon 38 usagé par le manchon neuf, le vérin de reprise d'efforts 40 assume la totalité de la tension du câble aérien 1.

### Nacelle :

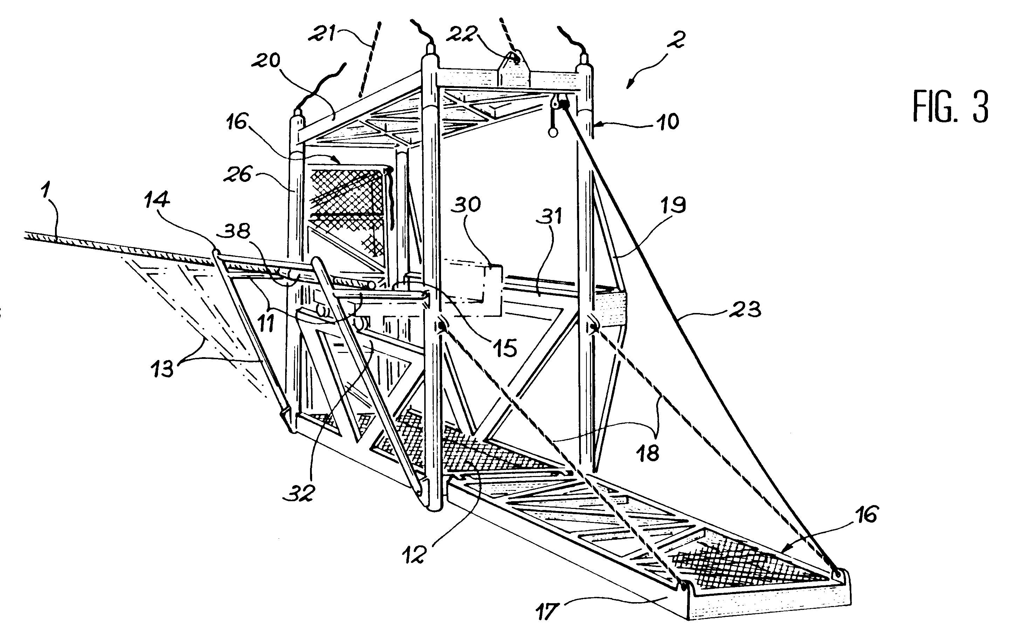

La mise en oeuvre d'un tel procédé n'est possible que dans la mesure où un ou plusieurs opérateurs se trouvent embarqués et suspendus au niveau du câble aérien 1, au moyen d'une nacelle, telle qu'elle est représentée sur la figure 3. Celle-ci est principalement constituée d'une structure métallique 10. De préférence, cette dernière a une ossature de forme parallélépipédique, composée principalement d'un plancher 12 horizontal, de quatre montants verticaux 26 et d'un châssis supérieur 20. Le plancher 12 est constitué soit d'un treillis métallique, soit de tôles, devant permettre à plusieurs opérateurs d'évoluer à l'intérieur de la cage délimitée par la structure métallique 10.

Des moyens d'arrimage à l'hélicoptère sont prévus sur cette structure métallique 10, et en particulier des anneaux 22 pratiqués sur le châssis supérieur 20.

Pour faciliter le positionnement d'une telle nacelle 2 auprès d'un câble déterminé 1, la nacelle 2 selon l'invention comporte des moyens de positionnement vis-à-vis de ce câble 1.

A cet effet, sur la figure 3, ces moyens de positionnement sont constitués de deux barres de guidage 13 montées inclinées par rapport à la structure métallique 10. Elles s'écartent ainsi de celle-ci, leurs extrémités supérieures 14 pouvant ainsi se trouver à plusieurs dizaines de centimètres des montants verticaux 26. Le volume délimité par ces barres de guidage 13 et les montants verticaux correspondants 26 doit constituer un logement 15 pour le positionnement de la nacelle. La partie supérieure 14 de ces barres de guidage 13 a pour but de capter le câble aérien 1, lorsque la nacelle est tractée légèrement vers le haut en dessous du cable 1. Une barre de positionnement 11 horizontale, reliant la barre de guidage 13 et les montants verticaux 26 permet de positionner le câble aérien 1 au niveau d'un plan de travail vis-à-vis des opérateurs embarqués à bord de la nacelle 2.

De manière préférentielle, l'ensemble des barres de guidage 13 est monté pivotant par rapport au plancher 12 de la nacelle 2.

Pour augmenter la capacité de travail de l'équipe d'opérateurs embarqués et leur champ d'action, la nacelle 2 possède des parois d'extrémités 16 montées pivotantes par rapport au plancher 12, par leurs extrémités inférieures 17. Comme ces parois latérales d'extrémités 16 sont avantageusement constituées d'un treillis métallique ou de tôles, elles peuvent, une fois placées horizontalement, constituer un prolongement du plancher 12. Leur fixation, dans cette position horizontale, peut être obtenue à l'aide de câbles de positionnement 18 reliant l'extrémité basculée de la paroi d'extrémité 16 à deux montants verticaux 26. La commande de ce basculement peut être obtenue au moyen d'un câble de manoeuvre 23, accessible à partir de l'intérieur de la structure métallique 10 par l'un des opérateurs. Tout autre moyen de blocage mécanique des parois latérales d'extrémités 16 dans leur position horizontale peut être adapté sur la structure métallique 10, de manière à obtenir la prolongation du plancher 12 de la nacelle 2.

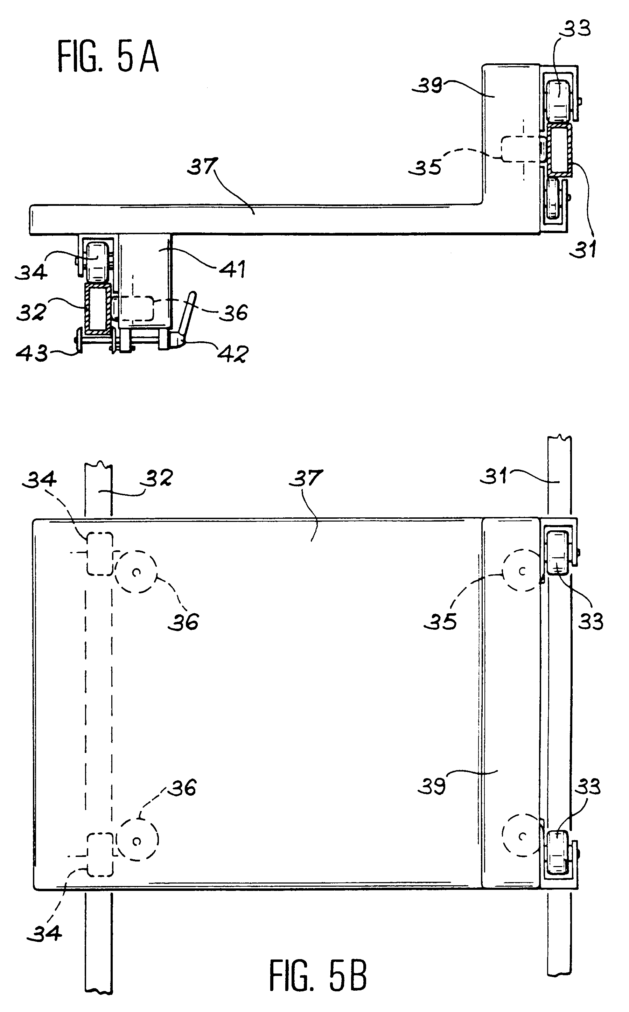

On comprend ainsi qu'une fois les deux parois latérales d'extrémités 16 déployées, les opérateurs bénéficient de plusieurs mètres de champ d'action le long du câble aérien 1, dans le but d'effectuer le changement de manchon, tel qu'il a été décrit dans les paragraphes précédents et sur la figure 2. Pour mener à bien cette opération, la nacelle 2 selon l'invention peut être équipée de matériel adapté spécialement à cet effet. Il est en effet possible d'équiper cette nacelle héliportée 2 d'un chariot 30 mobile en translation horizontale à l'intérieur de la structure métallique 10 pour faciliter le travail des opérateurs, en l'occurrence l'utilisation du vérin de reprise de forces 40. Ce chariot 30 est de préférence positionné à environ une hauteur d'un mètre du plancher 12, à la hauteur des mains des opérateurs. Il est ainsi possible d'utiliser des éléments horizontaux 31 et 32 de la structure métallique 10 pour servir de chemin de roulement au chariot mobile 30. Ce dernier est représenté plus en détail sur les figures 5A et 5B.

Le chariot mobile est constitué principalement d'un cadre métallique horizontal 37, aux extrémités duquel sont placés deux supports de roulement respectivement 39 et 41. Le positionnement de ces deux supports 39 et 41 se fait en fonction de la position des barres horizontales 31 et 32 de la structure métallique 10 de la nacelle. En effet, la première barre horizontale 31, placée à droite, est plus haute que la deuxième 32, placée à gauche. Sur ces deux supports 39 et 41, sont montés libres en rotation, d'une part deux couples de galets 33, et d'autre part, deux galets 34. Les galets 33 sont placés au dessus et en dessous de la première barre horizontale 31 de manière à enserrer celle-ci, pour que le chariot mobile 30 soit bloqué en translation verticale. Les deux galets 34 sont positionnés de manière à s'appuyer sur la deuxième barre horizontale 32, du côté gauche. Le chariot mobile peut ainsi rouler sur les deux barres horizontales 31 et 32. Des moyens de blocage en translation horizontale sont prévus sur le chariot. Ils peuvent être constitués d'une vis de serrage 42 agissant sur deux rondelles 43 pouvant se rapprocher l'une de l'autre et créer un frottement important sur les parois latérales de la barre horizontale de gauche 32.

Pour permettre au chariot mobile 30 de rester sur les barres horizontales 31 et 32, deux galets de guidage 35 et 36 sont montés libres en rotation autour de deux axes verticaux pour venir en appui contre, respectivement, les deux barres de guidage 31 et 32.

La figure 4 illustre des moyens pyrotechniques de séparation de la structure métallique 10 par rapport au châssis supérieur 20. En effet, la nacelle 2 restant constamment suspendue à I'hélicoptère, et transportant plusieurs opérateurs, il est impératif de prévoir la possibilité de lester la charge de l'hélicoptère, au cas où celui-ci aurait un incident technique ne lui permettant pas de fournir la puissance nécessaire à la sustentation de la nacelle. Il est donc prévu que la structure métallique 10 puisse être détachée du châssis supérieur 20 en quelques secondes. Ces moyens pyrotechniques de séparation sont constitués de préférence de plusieurs tirants 25 placés à l'intérieur des montants verticaux 26 de la structure métallique 10. Leurs extrémités inférieures sont fixées à la structure métallique, tandis que leurs extrémités supérieures 27 visibles grâce à la vue éclatée de la figure 4, sont fixées au châssis supérieur 20 et sont complétées de boulons explosifs 28. Ces derniers sont reliés par des cordeaux pyrotechniques 29 à l'hélicoptère qui peut ainsi commander à n'importe quel moment la séparation de la nacelle 10 du châssis supérieur 20.

Dans le but d'assurer les opérateurs contre une telle éventualité, des anneaux de sécurité 24 sont prévus sur le châssis supérieur 20. Les opérateurs peuvent ainsi être assujettis à ce châssis supérieur 20 en s'attachant à l'un des anneaux de sécurité 24, par exemple au moyen de matériel d'alpinisme tel que des mousquetons. De cette manière, en cas de déficience de la ou des turbines de l'hélicoptère, il est possible de libérer ce dernier d'un poids important tout en pouvant évacuer les opérateurs suspendus au châssis supérieur 20.

On comprend qu'en utilisant la nacelle selon l'invention, il est possible de procéder en une heure à plusieurs changements de manchons de jonction sur des câbles aériens, sans pour cela être obligés de déposer ces câbles au sol et de les remonter une fois le changement effectué. Chaque changement de manchon nécessite bien entendu une préparation préalable des opérations et du matériel qui est couramment utilisé pour ce genre d'opérations ou pour la manipulation de câbles sous tension.

## Revendications

1. Nacelle héliportée (2) destinée à la réparation et l'entretien de câbles aériens (1), constituée d'une structure métallique (10) comportant :
- un plancher (12) sur lequel peuvent évoluer un ou plusieurs opérateurs ;
- un châssis supérieur (20) ;
- des moyens d'arrimage de la structure métallique (10) à l'hélicoptère auquel la nacelle (2) est suspendue, constitués d'anneaux (22) fixés au châssis supérieur (20) et dans lesquels peuvent être passées des élingues (21) d'un filin de l'hélicoptère ;
- des moyens de positionnement de la nacelle (2) par rapport à un câble aérien (1), la nacelle étant constamment suspendue à l'hélicoptère ;
- des moyens pyrotechniques de séparation de la structure métallique (10) par rapport au châssis supérieur (20) ;
- des moyens d'arrimage (24) des opérateurs au châssis supérieur (20), en cas de largage de la structure métallique (10).

2. Nacelle (2) selon la revendication 1, caractérisée en ce que les moyens de positionnement sont constitués d'au moins une barre de guidage (13) inclinée vers le haut et placée latéralement à la structure métallique (10) pour amener le câble (1) au fond d'un logement (14) par traction verticale de l'hélicoptère sur la nacelle (2).

3. Nacelle (2) selon la revendication 1 ou 2, caractérisée en ce que la structure métallique (10) a une forme parallélépipédique, avec au moins une paroi latérale d'extrémité (16) montée pivotante à son extrémité inférieure (17) ou pouvoir être placée dans le prolongement du plancher (12) pour prolonger ce dernier.

4. Nacelle (2) selon la revendication 3, caractérisée en ce qu'elle comprend des câbles de positionnement (18) pour bloquer en position horizontale les parois latérales d'extrémité (16) par rapport à la structure métallique (10).

5. Nacelle (2) selon la revendication 1, caractérisée en ce que la fixation de la structure métallique (10) au châssis supérieur (20) se fait au moyen de plusieurs tirants (25) placés à l'intérieur de montants verticaux (26) de la structure métallique (10) et fixés à cette dernière par leur extrémité inférieure et dont l'extrémité supérieure (27) de chacun est fixée dans un coin un châssis (20) et équipée d'un boulon pyrotechnique (28) constituant une partie des moyens pyrotechniques de séparation.

6. Nacelle (2) selon la revendication 5, caractérisée en ce que les moyens pyrotechniques de séparation sont complétés par des cordeaux pyrotechniques (29) reliés à l'hélicoptère pour commander le fonctionnement des boulons pyrotechniques (28).

7. Nacelle (2) selon la revendication 1, caractérisée en ce qu'elle comprend un chariot mobile (30) déplaçable horizontalement dans la structure métallique (20) et servant de table de travail sur le câble (1) pour les opérateurs.

8. Procédé de changement d'un manchon (38) de jonction entre deux tronçons d'un câble aérien (1), comportant les étapes suivantes :
- positionner par héliportage une nacelle (2) selon l'une quelconque des revendications précédentes, près du câble (1) et maintenir cette nacelle (2) coincée en dessous du câble (1) par traction verticale de l'hélicoptère ;
- fixer un vérin de reprise d'efforts (40) sur le câble (1) aux bornes du manchons (38) à changer ;
- tendre légèrement le câble (1) avec le vérin de reprise d'efforts (40) pour détendre le câble (1) au niveau du manchon( 38) ;
- démonter le manchon usagé (38) ;
- placer un autre manchon neuf (38) ;
- détendre le câble (1) par relâchement du vérin de reprise d'efforts (40) ;
- dégager la nacelle (2) du câble (1) et l'évacuer.

## Patentansprüche

1. Hubschraubergetragener Arbeitskorb (2) zur Reparatur und Wartung von Freileitungskabeln (1), gebildet durch eine Metallkonstruktion (10), welche aufweist:
- einen Boden (12), auf dem sich ein oder mehrere Arbeiter bewegen können;
- ein oberes Chassis (20);
- Befestigungsmittel zum Befestigen der Metallkonstruktion (10) an dem Hubschrauber, an dem der Arbeitskorb (2) aufgehängt ist, gebildet durch an dem oberen Chassis (20) befestigte Ösen (22), durch die Schlaufen (21) eines Seilgeschirrs des Hubschraubers laufen;
- Mittel zum Positionieren des Arbeitskorbs (2) in Bezug auf ein Freileitungskabel (1), während der Arbeitskorb dauernd an einem Hubschrauber aufgehängt ist;
- pyrotechnische Mittel zum Trennen der Metallkonstruktion (10) von dem oberen Chassis (20);
- Befestigungsmittel (24) zum Sichern der Arbeiter an dem oberen Chassis (20) im Fall des Notabwurfs der Metallkonstruktion (10).

2. Arbeitskorb nach Anspruch 1, **dadurch gekennzeichnet,** daß die Positioniermittel durch mindestens eine Führungsstange (13) gebildet werden, die nach oben geneigt ist und seitlich an der Metallkonstruktion (10) angeordnet ist, um das Kabel (1) durch vertikalen Zug des Hubschraubers an dem Arbeitskorb (2) vor einen Aufnahmeraum (14) zu holen.

3. Arbeitskorb (2) nach Anspruch 1 oder 2, **dadurch gekennzeichnet,** daß die Metallkonstruktion (10) eine Parallelepiped-Form mit mindestens einer äußeren Seitenwand (16) aufweist, welche an ihrem unteren Ende (17) schwenkbar gelagert ist, um in die Verlängerung des Bodens (12) gebracht werden zu können, um letzteren zu verlängern.

4. Arbeitskorb (2) nach Anspruch 3, **dadurch gekennzeichnet,** daß er Positionierseile (18) aufweist, um die äußeren Seitenwände (16) in Bezug auf die Metallkonstruktion (10) in einer horizontalen Lage zu halten.

5. Arbeitskorb nach Anspruch 1, **dadurch gekennzeichnet,** daß die Befestigung der Metallkonstruktion (10) an dem oberen Chassis (20) mittels mehrerer Zugstäbe (25) erfolgt, die sich im Inneren vom Vertikalpfosten (26) der Metallkonstruktion (10) befinden, und die an letzterer mit ihrem unteren Ende befestigt sind, während ihr jeweiliges oberes Ende (27) in einer Ecke mit dem Chassis (20) verbunden und mit einem pyrotechnischen Bolzen (28) ausgestattet ist, der einen Teil der pyrotechnischen Trennmittel bildet.

6. Arbeitskorb (2) nach Anspruch 5, **dadurch gekennzeichnet,** daß die pyrotechnischen Trennmittel vervollständigt werden durch Zündschnüre (29), die mit dem Hubschrauber verbunden sind, um das Auslösen der pyrotechnischen Bolzen (28) zu veranlassen.

7. Arbeitskorb (2) nach Anspruch 1, **dadurch gekennzeichnet,** daß er einen beweglichen Schlitten (30) aufweist, der horizontal in der Metallkonstruktion (20) verlagerbar ist und als Arbeitstisch für die Arbeiter an dem Kabel (1) dient.

8. Verfahren zum Austauschen einer Verbindungsmuffe (38) zwischen zwei Abschnitten eines Freileitungskabels (1), umfassend folgende Schritte:
- mit Hilfe eines Hubschraubers wird ein Arbeitskorb (2) nach irgendeinem der vorhergehenden Ansprüche nahe dem Kabel (1) positioniert, und dieser Arbeitskorb (2) wird durch Vertikalzug des Hubschraubers unterhalb des Kabels (1) festgehalten;
- an dem Kabel (1) wird an den Anschlüssen der auszutauschenden Muffe (38) ein Kraftaufnahmeschloß (40) befestigt;
- mit dem Kraftaufnahmeschloß (40) wird das Kabel (1) etwas angezogen, um das Kabel (1) in der Höhe der Muffe (38) zu entlasten;
- die gebrauchte Muffe (38) wird abgebaut;
- es wird eine andere, neue Muffe (38) angebracht;
- das Kabel (1) wird durch Entspannen des Kraftaufnahmeschlosses (40) entspannt;
- der Arbeitskorb wird gelöst und entfernt.

## Claims

1. Helicopter-carried nacelle (2) used for the repair and maintenance of an overhead cable constituted by a metal structure (10) comprising at least one floor (12) on which can work one or more operators, an upper chassis (20), means for securing the metal structure (10) to the helicopter on which the nacelle (2) is suspended, constituted by rings (22) fixed to the upper chassis (20) and into which can be passed slings (21) of a cord of the helicopter, means for positioning the nacelle (2) relative to an overhead cable (1), the nacelle being constantly suspended on the helicopter, pyrotechnic means for separating the metal structure (10) from the upper chassis (20) and means (24) for securing the operators to the upper chassis (20), in the case of the release of the metal structure (10).

2. Nacelle (2) according to claim 1, characterized in that the positioning means are constituted by at least one guide bar (30), which is inclined upwards and positioned laterally of the metal structure (10) in order to bring the cable (1) to the bottom of a recess (14) by vertical pulling of the helicopter on the nacelle (2).

3. Nacelle (2) according to claim 1 or 2, characterized in that the metal structure (10) is parallelepipedic, with at least one lateral end wall (16) mounted in pivoting manner at its lower end (17) or which can be placed in the extension of the floor (12) to extend the latter.

4. Nacelle (2) according to claim 3, characterized in that it incorporates positioning cables (18) for locking in a horizontal position the lateral end wall (16) with respect to the metal structure (10).

5. Nacelle (2) according to claim 1, characterized in that the metal structure (10) is fixed to the upper chassis (20) by several tie rods (25) placed within vertical posts (26) of the metal structure (10) and fixed to the latter by their lower ends and whereof the upper end (27) of each is fixed in an angle of the chassis (20) and equipped with a pyrotechnic bolt (28) forming part of the pyrotechnic separating means.

6. Nacelle (2) according to claim 5, characterized in that the pyrotechnic separation means are completed by pyrotechnic cords (29) connected to the helicopter to control the operation of the pyrotechnic bolts (28)

7. Nacelle (2) according to claim 1, characterized in that it comprises a mobile carriage or trolley (30) displaceable horizontally in the metal structure (20) and serving as a work table on the cable (1) for the operators.

8. Process for changing a coupling sleeve (38) between two sections of an overhead cable (1) comprising the positioning by helicopter of a nacelle (2) in accordance with any one of the preceding claims, close to the cable (1) and maintaining said nacelle (2) wedged below the cable (1) by the vertical pulling of the helicopter, fixing a force take-up jack (40) to the cable (1) at the ends of the sleeve (38) to be changed, slightly tensioning the cable (1) with the force take-up jack (40) in order to detension the cable (1) at the sleeve (38), dismantling the used sleeve (38), fitting a new sleeve (38), detensioning the cable (1) by releasing the force take-up jack (40) and freeing the nacelle (2) from the cable (1) and the removal thereof.
